# EUROPEAN PATENT APPLICATION

(11) **EP 1 004 853 A1**
(43) Date of publication of application: **31.05.2000**
(21) Application number: 98936723.0
(22) Date of filing: 11.08.1998
(51) Int. Cl.: G01D 5/12, G01D 5/16, G01B 7/00, G01D 5/06, G01D 5/165

(54) **POSITION SENSOR**

(30) Priority: 12.08.1997 JP 23041897; 29.05.1998 JP 16588798
(71) Applicant: MIKUNI CORPORATION, Chiyoda-ku, Tokyo 101-0021 (JP)
(72) Inventor: SEKIYA, Mitsuru, Kanagawa-ken 259-0144 (JP)
(74) Representative: Skone James, Robert Edmund
(86) International application number: JP9803557
(87) International publication number: WO9908072

(57) **Abstract**

The present invention provides a position sensor in which an external voltage is applied to the both ends of a resistance film 5b formed on the surface of a resistance board 5 and voltage is taken out for external use from a contact probe 3, in contact with the resistance film 5b, interlocked with a movable member; wherein the resistance board 5 is provided, on the rear surface thereof, with a magnetic substance or a magnet 4 which is interlocked with the movable member, and the contact probe 3 is formed into a cylindrical magnetic substance or a magnet to move rotatably as the magnetic substance or the magnet moves. This improves durability of the position sensor that takes output out of the contact probe that movingly contacts the resistance film to the both ends of which a voltage is applied.

## Description

### Technical Field

The present invention relates to a position sensor and, more particularly, to a means for improving durability of a position sensor that takes output from a contact probe that movingly contacts a resistance film to the both ends of which a voltage is applied.

### Background Art

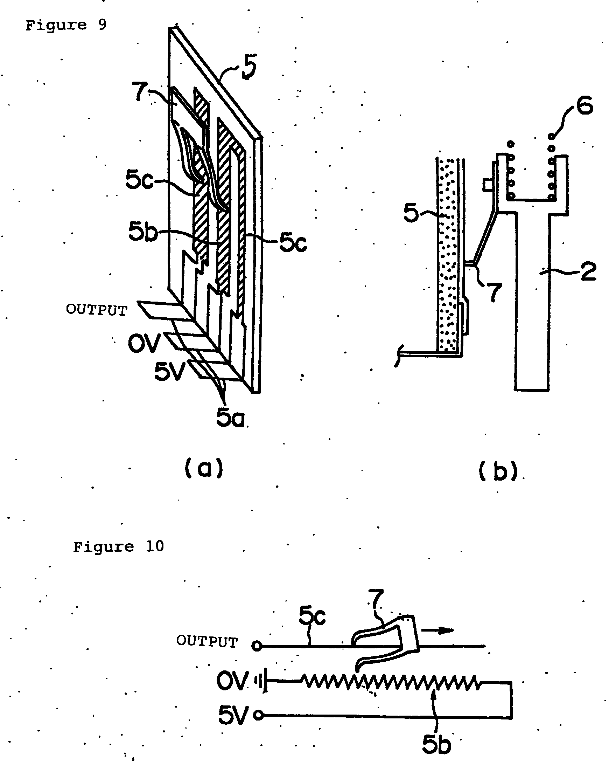

Referring to FIG.9 and FIG.10, an example of a prior art position sensor that adopts a resistance film will be explained. A slider 2 shown in FIG.9 (b) is interlocked with an actuator which is not shown, and energized by a compression coil spring 6 in the direction of the actuator to travel by the same distance as that of the actuator. The slider 2 is provided with a brush 7 secured thereto.

As shown in FIG.9 (a) in detail, the brush 7 contacts a resistance film 5b and conductive films 5c on a resistance board 5 to take a voltage according to the position of the resistance film 5b. That is, the both ends of the resistance film 5b are connected to electrodes, 5a and 5a, via the conductive films, 5c and 5c, with a voltage of 5V applied to the electrodes. An output voltage is taken from the electrodes 5a connected to the conductive films 5c according to the position of the brush 7. FIG.10 shows a circuit that takes the output voltage.

In the prior art position sensor mentioned above, it is necessary to bring the brush 7 into contact with the resistance film 5b and the conductive film 5c at a certain contact pressure in order to reduce the contact resistance between the brush 7, and the resistance film 5b and the conductive film 5c. For this reason, the brush 7, the resistance film 5b, and the conductive film 5c wear out as the brush 7 slides. This may also lead to output failure caused by worn dust particles taken in or worn dust particles stuck. Moreover, the wearing of the resistance film 5b causes the linearity of output to be impaired.

Because of the foregoing reasons, the prior art position sensor mentioned above was not suitable for use in which the brush was required for a large number of movements. At present, the limit number of movements is approximately 20,000,000 times for full-stroke movement of the brush and 300,000,000 times for dither operation with a stroke of 0.5mm.

The present invention was developed to solve the above problems with the object of providing a position sensor that hardly wears due to operation of the contact probe and thus has a long life.

### Disclosure of Invention

The present invention provides a position sensor in which an external voltage is applied to the both ends of a resistance film formed on the surface of a resistance board, and voltage is taken out for external use from a contact probe, which is in contact with the abovementioned resistance film and interlocked with a movable member; the position sensor is constituted wherein the abovementioned resistance board is provided, on the rear surface thereof, with a magnet or a magnetic substance which is interlocked with the abovementioned movable member, and the abovementioned contact probe is formed into a cylindrical magnetic substance or a magnet to move rotatably as the abovementioned magnet or the magnetic substance moves.

Furthermore, the abovementioned position sensor has the abovementioned movable member that is interlocked with an actuator.

Furthermore, the position sensor of the present invention is a position sensor in which an external voltage is applied to the both ends of a resistance film formed on the surface of a resistance board, and voltage is taken out for external use from a contact probe which is in contact with the abovementioned resistance film and which is interlocked with a movable member; the position sensor wherein the abovementioned resistance board is provided, on the rear surface thereof, with a magnet or a magnetic substance which is interlocked with the abovementioned movable member, and the abovementioned contact probe is formed into a complex body, in which a conductive coil spring is arranged around a cylindrical magnetic substance or a magnet, in such a manner as to rotatably move following the movement of the magnet or the magnetic substance.

Furthermore, the abovementioned position sensor is provided with the abovementioned coil spring which has the shape of a drum and the both ends of which are wound around the cylindrical magnetic substance or the magnet with no clearance left thereon.

Still furthermore, each of the abovementioned position sensors has a magnet or magnetic substance interlocked with the abovementioned movable member that is arranged on the abovementioned resistance board without being in contact therewith.

### Brief Description of Drawings

FIG.1

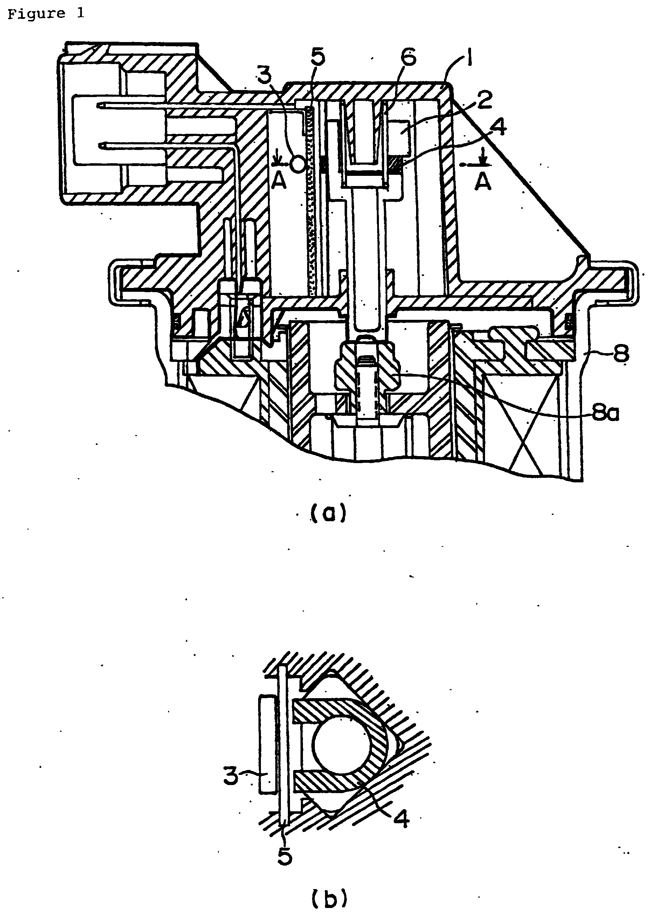

   FIG.1 (a) is a cross sectional view showing the structure of the position sensor of a first embodiment of the present invention, and FIG.1 (b) is a cross section taken along line A-A of FIG.1 (a).
FIG.2

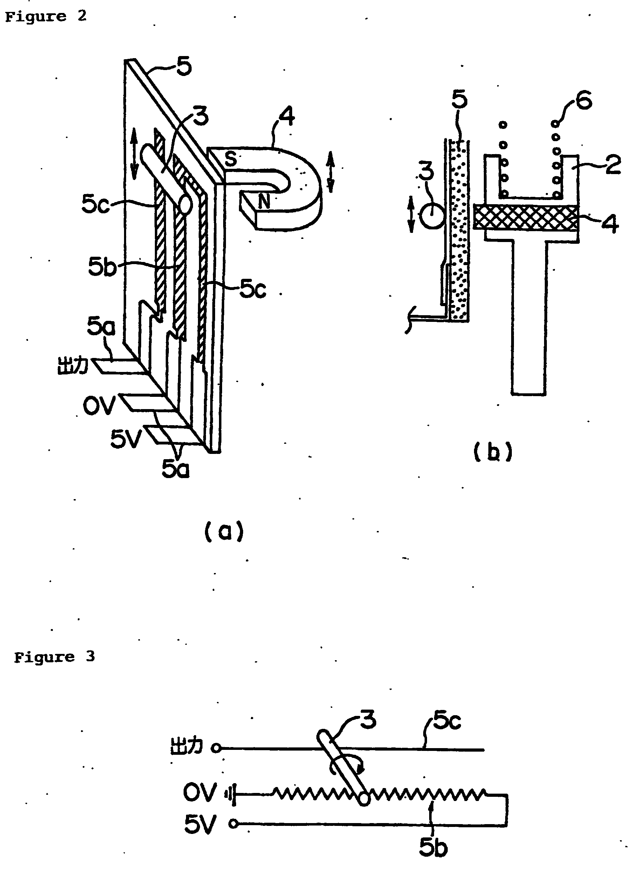

   FIG.2 (a) is a perspective view showing the operational principle of the position sensor, and FIG.2 (b) is a cross sectional view showing the operational principle of the position sensor.
FIG.3
   This is a view showing the circuit of the position sensor.
FIG.4

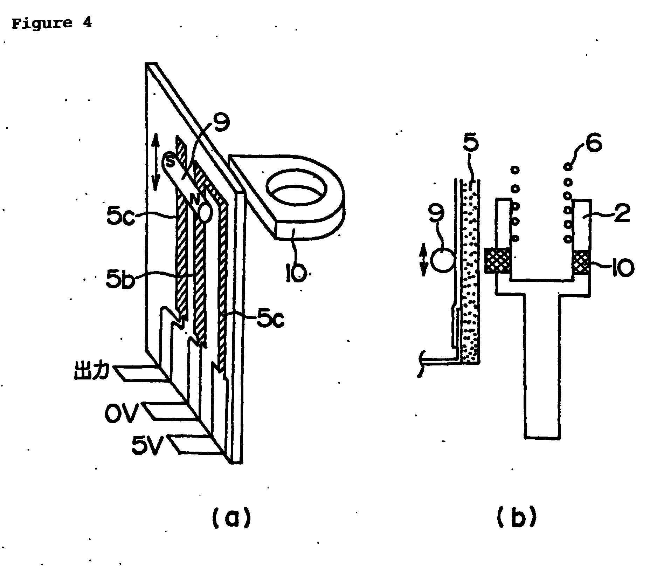

   FIG.4 (a) is a perspective view showing the operational principle of the position sensor of a second embodiment of the present invention, and FIG.4 (b) is a cross sectional view showing the operational principle of the position sensor.
FIG.5

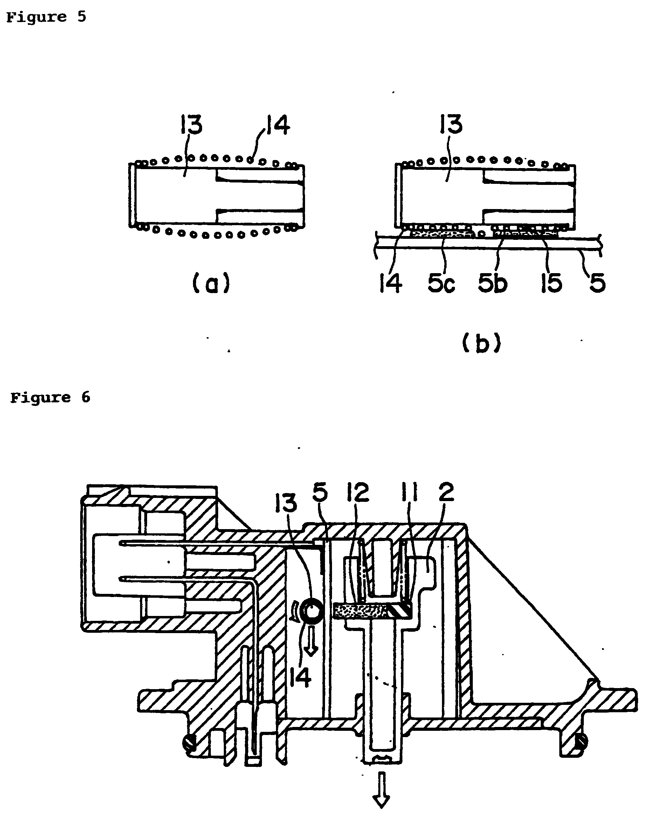

   FIG.5 (a) is a cross sectional view showing a contact probe of the position sensor of a third embodiment of the present invention, and FIG.5 (b) is a cross sectional view showing the contact probe in use.
FIG.6
   This is a cross sectional view showing the structure of the position sensor of the third embodiment of the present invention.
FIG.7
   This is a partial view of the plan showing an example of the position sensor in use of the first embodiment of the present invention.
FIG.8

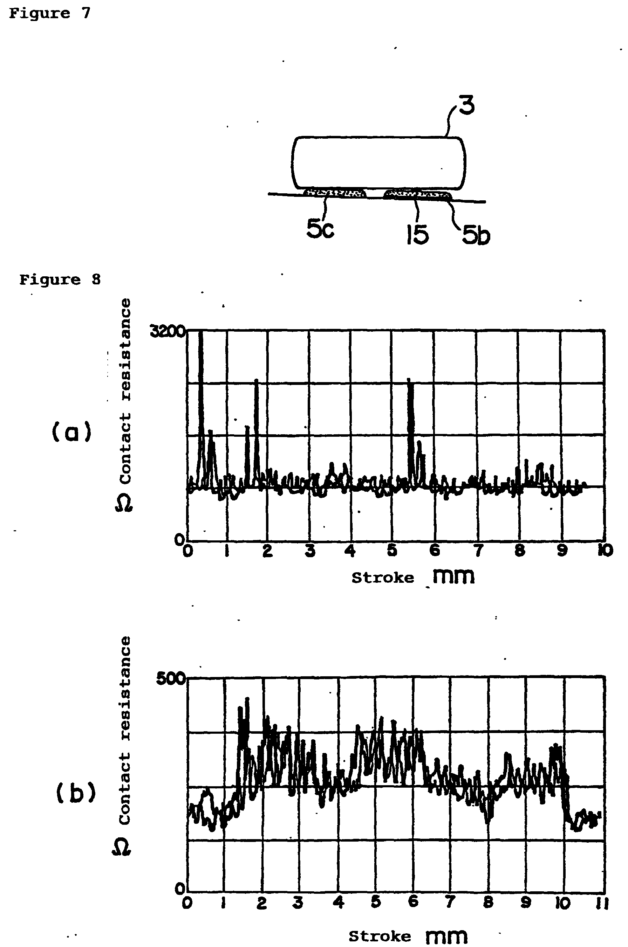

   FIG.8 (a) is a graph illustrating the variation of the contact resistance of the position sensor of the first embodiment of the present invention, and FIG.8 (b) is a graph illustrating the variation of the contact resistance of the position sensor of the third embodiment of the present invention
FIG.9
   FIG.9 (a) is a perspective view showing the operational principle of a prior art position sensor, and FIG.9 (b) is a cross sectional view showing the operational principle of the position sensor.
FIG. 10
   This is a view showing the circuit of the position sensor.

### [Best Mode for Carrying Out the Invention]

The position sensors of the embodiments of the present invention will be explained below with reference to the drawings. FIG.1 shows a position sensor of a first embodiment of the present invention. A main body 1 of the position sensor shown in FIG.1 is provided with a resistance board 5 secured thereto, and is provided with a slider 2 slidably up and down. The main body 1 of the position sensor is provided on an actuator 8, and the slider 2 is connected to a valve of the actuator 8 by means of a connecting member 8a. Furthermore, the slider 2 is energized by means of a compression coil spring 6 in the direction of the connecting member 8a to move up and down with the same stroke as that of the valve.

As shown in FIG.1(b), the slider 2 is provided with U-shaped magnet 4 secured thereto, and both tops of the magnet 4 face the rear surface of the resistance board 5 with no contact therewith. The resistance board 5 is provided, on the surface thereof, with a contact probe 3 which is attracted by the magnet 4 to be pressure-connected to the resistance board 5. The contact probe 3 is made of a magnetic substance having the shape of a cylinder, and attracted by the magnet 4 to drive the resistance board 5 rotationally.

As shown in FIG.2 (a) in detail, the contact probe 3 contacts a resistance film 5b and conductive films 5c in a resistant board 5 to take a voltage according to the position of the resistance film 5b. That is, the both ends of the resistance film 5b are connected to electrodes, 5a and 5a, via the conductive films, 5c and 5c, with a voltage of 5V applied to the electrodes. An output voltage is taken from the electrodes 5a connected to the conductive films 5c, according to the position of the contact probe 3. FIG.3 shows a circuit that takes the output voltage.

As mentioned in the foregoing, the contact probe 3 undergoes rolling contact with the resistance board 5, whereby the resistance film 5b and conductive films 5c hardly deteriorate, so that the position sensor is provided with a remarkably longer life compared with prior art position sensors. Furthermore, the slider 2 does not contact the resistance board 5, thereby reducing frictional resistance accompanying the sliding movement of the slider 2.

FIG.4 shows a second embodiment of the present invention. This embodiment adopts a contact probe 9 made of a magnet instead of the contact probe 3 of the first embodiment, and a magnetic substance 10 instead of the magnet 4. Other configurations are the same as that of the first embodiment. The same effect as that of the first embodiment is provided by the attraction of the contact probe 9 and the magnetic substance 10, however, the magnetic substance 10 does not need not to be magnetized after being insert-molded, thereby providing for a simple manufacturing process.

FIG.5 and FIG.6 show a third embodiment of the present invention. This embodiment adopts a contact probe of the structure shown in FIG.5 (a) instead of the contact probe 3 of the first embodiment. The contact probe has the structure in which a coil spring 14 in the shape of a drum is fitted around a cylindrical magnetic substance 13. The coil spring 14 is made of conductive material the both ends of which are wound around the magnetic substance 13 with no clearance left thereon. The central portion of the coil spring 14 is not in contact with the magnetic substance 13 in a natural state.

FIG.6 shows the structure of the position sensor of the third embodiment. In this embodiment, there is provided an attraction member wherein a yoke 11 and a magnet 12 are built in one piece in the slider 2 that is interlocked with an actuator. This attraction member attracts the magnetic substance 13, which has been explained in reference to FIG.5, across the resistance board 5. Other structures are the same as that of the first embodiment. Movement of the slider 2 in the direction of the arrow causes the magnetic substance 13 to follow the slider 2 rotationally as shown by the arrow.

The magnet 12 attracts the magnetic substance 13, thereby causing the coil spring 14 to deform as shown in FIG.5 (b). That is, the portion in between the resistance board 5 and the magnetic substance 13 is pressure-connected to the resistance film 5b and the conductive film 5c. In the first embodiment, FIG.7 shows the state of the contact probe 3 and the resistance film 5b containing dust particles 15 therebetween. Having such dust particles causes the contact probe 3 and the resistance film 5b to be separated, thereby resulting in increasing the contact resistance.

As shown in FIG.5 (b), the third embodiment allows the dust particles 15, if any, to penetrate the coil springs 14, whereby the coil springs 14 and the resistance film 5b are kept tight therebetween. Moreover, even when some projections and depressions exist on the surface of the resistance film 5b, the coil springs 14 are deformed in such a manner as to keep the coil springs 14 and the resistance film 5b tight. Still moreover, although the magnetic substance has a relatively high resistance, a material of a low resistance can be used for the coil springs 14.

As mentioned above, compared with the first embodiment, the third embodiment allows the contact resistance between the contact probe and the resistance film to be reduced. FIG.8 (a) shows the variation of the contact resistance between the contact probe and the resistance film when the slider moves once back and forth in the first embodiment. On the other hand, FIG.8(b) shows the variation of the contact resistance between the contact probe and the resistance film when the slider moves once back and forth in the third embodiment. In the figures, it can be seen that the contact resistance of the third embodiment is lower than that of the first embodiment.

Although the embodiments allow the slider 2 not to contact the resistance board 5, a member with a low frictional resistance may be used for slight contact. Even in this case, the advantages of the present invention wherein the contact probe, the resistance film, and conductive film hardly deteriorate can be still obtained. Furthermore, the embodiments adopt a slider 2 that is formed in such a manner as to interlock with the actuator. However, replacing the slider 2 with an object that can be moved manually such as a movable member which interlocks with an accelerator pedal or something that can be moved by other external forces may also provide the effect of the present invention.

### Industrial Applicability

As explained in the foregoing, according to the position sensor of the present invention, a contact probe and a resistance board perform rolling contact therebetween. This allows the contact probe, the resistance film, and the conductive film to hardly deteriorate and thus allows the position sensor to have a longer life as well.

Furthermore, when a target object of which location is to be detected performs vigorous and complicated movements or a large acceleration is applied to the position sensor or to a target object to be detected, movements of the contact probe are leveled to provide for further durability against dither operation or high acceleration.

Furthermore, allowing the magnet or the magnetic substance not to contact the resistance board results in no frictional resistance against the magnet or the magnetic substance, thereby providing for stabilizing the movement of the slider and thus for increasing reliability. Additionally, the magnet or the magnetic substance attracts the contact probe to automatically position the probe during assembling work, thus providing for good assembling workability.

Still furthermore, the contact probe is formed into a complex body wherein a conductive coil spring is arranged around the circumference of a cylindrical magnetic substance or magnet, so that the contact resistance between the contact probe and the resistance film is low and stable, thereby providing for stable output.

### [Explanation of the symbols]

- 1.: Main body of position sensor
- 2.: Slider
- 3.: Contact probe
- 4.: Magnet
- 5.: Resistance board, 5a Electrode, 5b Resistance film, 5c Conductive film
- 6.: Compression coil spring
- 7.: Brush
- 8.: Actuator, 8a Connecting member
- 9.: Contact probe
- 10.: Magnetic substance
- 11.: Yoke
- 12.: Magnet
- 13.: Magnetic substance
- 14.: Coil spring
- 15.: Dust particles

## Claims

1. A position sensor in which an external voltage is applied to the both ends of a resistance film formed on the surface of a resistance board, and voltage is taken out for external use from a contact probe which is in contact with said resistance film and which is interlocked with a movable member;
said position sensor wherein said resistance board is provided, on the rear surface thereof, with a magnet or a magnetic substance which is interlocked with said movable member, and said contact probe is formed into a cylindrical magnetic substance or a magnet to move rotatably as said magnet or said magnetic substance moves.

2. The position sensor according to Claim 1, wherein said movable member is interlocked with an actuator.

3. A position sensor in which an external voltage is applied to the both ends of a resistance film formed on the surface of a resistance board and voltage is taken out for external use from a contact probe, in contact with said resistance film, and interlocked with a movable member;
said position sensor wherein said resistance board is provided, on the rear surface thereof, with a magnet or a magnetic substance which is interlocked with said movable member, and said contact probe is formed into a complex body, wherein a conductive coil spring is arranged around the circumference of a cylindrical magnetic substance or a magnet, in such a manner as to rotatably move following the movement of said magnet or said magnetic substance.

4. The position sensor according to Claim 3, wherein said coil spring is formed in the shape of a drum and the both ends of the coil spring are wound around a cylindrical magnetic substance or a magnet with no clearance left thereon.

5. The position sensor as in any one of Claims 1 through 4, wherein a magnet or a magnetic substance interlocked with said movable member is arranged on said resistance board without being in contact therewith.
